(19) Europäisches Patentamt
European Patent Office
Office européen des brevets

(11) **EP 4 716 342 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
***H04W 72/0453*** *(2023.01)*

(21) Application number: **24835458.1**

(52) Cooperative Patent Classification (CPC):
**H04B 1/713; H04W 72/0453; H04W 72/23**

(22) Date of filing: **05.07.2024**

(86) International application number:
**PCT/CN2024/104067**

(87) International publication number:
**WO 2025/007980 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.07.2023 CN 202310831011**

(71) Applicant: **Huawei Technologies Co., Ltd.
Shenzhen, Guangdong 518129 (CN)**

(72) Inventors:
• **QU, Weilin
  Shenzhen, Guangdong 518129 (CN)**
• **WU, Yiling
  Shenzhen, Guangdong 518129 (CN)**
• **JIN, Zhe
  Shenzhen, Guangdong 518129 (CN)**
• **LUO, Zhihu
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **UPLINK SIGNAL TRANSMISSION METHOD AND RELATED APPARATUS**

(57)     This application provides an uplink signal transmission method and a related apparatus. The method includes: A network device sends first information to a terminal device, where the first information indicates to perform frequency-hopping transmission on a plurality of CBs or a plurality of CBGs, the plurality of CBs or the plurality of CBGs belong to one TB, and one CBG includes a plurality of CBs; and the terminal device receives the first information, and transmits the plurality of CBs or the plurality of CBGs on a plurality of frequency domain resources through frequency hopping, where the plurality of frequency domain resources correspond to different frequencies. According to the method provided in this application, transmission reliability of transmitting a TB with a long length by a low-power terminal can be reduced.

400

Network device → Terminal device

S401: First information, where the first information indicates to perform frequency-hopping transmission on a plurality of CBs or a plurality of CBGs

S402: Send or receive the plurality of CBs or the plurality of CBGs on a plurality of frequency domain resources through frequency hopping

FIG. 4

## Description

This application claims priority to Chinese Patent Application No. 202310831011.3, filed with the China National Intellectual Property Administration on July 6, 2023 and entitled "UPLINK SIGNAL TRANSMISSION METHOD AND RELATED APPARATUS", which is incorporated herein by reference in its entirety.

## TECHNICAL FIELD

This application relates to the communication field, and in particular, to an uplink signal transmission method and a related apparatus.

## BACKGROUND

As internet of things (internet of things, IoT) communication is increasingly widely applied, a quantity of connected IoT devices continuously increases. Consequently, the industry has an increasingly strong requirement for reducing costs and power consumption of the IoT devices. Based on a purpose of connecting all things through the IoT in a 5th generation (5th generation, 5G) mobile communication system, passive internet of things (passive IoT)/backscatter communication (backscatter) has become an important research direction in the 5G internet of things field. Due to limitations on power consumption and complexity of a passive internet of things terminal device/backscatter communication terminal device, power consumption of this type of terminal device is limited to a range of less than 1 microwatt ($\mu$W) or less than 100 $\mu$W. In this power consumption range, it is difficult for this type of terminal device to implement complex channel encoding.

In a related technology, rate matching is not performed after encoding, which may reduce channel encoding complexity of the terminal device. In this way, a signal encoding requirement of a low-power terminal device is met. However, for a transport block (transport block, TB) with a large uplink transmission length, rate matching is not performed after encoding, which greatly affects performance of channel encoding and reduces transmission performance.

## SUMMARY

This application provides an uplink signal transmission method and a related apparatus, to improve transmission performance of transmitting a TB with a large length by a low-power terminal.

According to a first aspect, this application provides an uplink signal transmission method. The method may be applied to a terminal device. For example, the method may be performed by the terminal device, or may be performed by a component (for example, a chip or a chip system) configured in the terminal device, or may be implemented by a logical module or software that can implement all or a part of functions of the terminal device. This is not limited in this application.

For example, the method includes: receiving first information, where the first information indicates to perform frequency-hopping transmission on a plurality of code blocks (code block, CB) or a plurality of code block groups (code block group, CBG), the plurality of CBs or the plurality of CBGs belong to one TB, and one CBG includes a plurality of CBs; and sending the plurality of CBs or the plurality of CBGs on a plurality of frequency domain resources through frequency hopping, where the plurality of frequency domain resources correspond to different frequencies.

That the plurality of CBs or the plurality of CBGs belong to one TB may be understood as that one TB is divided into the plurality of CBs or the plurality of CBGs. For example, when one TB is divided into the plurality of CBs, the first information indicates to perform frequency-hopping transmission on the plurality of CBs, and the terminal device sends the plurality of CBs on the plurality of frequency domain resources through frequency hopping. When one TB is divided into the plurality of CBGs, the first information indicates to perform frequency-hopping transmission on the plurality of CBGs, and the terminal device sends the plurality of CBGs on the plurality of frequency domain resources through frequency hopping.

It should be understood that different CBGs in the plurality of CBGs may include a same quantity of CBs or different quantities of CBs.

It should be further understood that a quantity of the plurality of frequency domain resources is the same as a quantity of a plurality of CBs or a plurality of CBGs that belong to one TB.

Optionally, the plurality of frequency domain resources may be predefined in a protocol, or may be configured by a network device for the terminal device.

For example, when the plurality of frequency domain resources are configured by the network device for the terminal device, the method may further include: receiving second information, where the second information indicates frequency domain positions of the plurality of frequency domain resources; and determining the plurality of frequency domain resources based on the second information.

In this application, a to-be-transmitted TB is divided into a plurality of CBs or a plurality of CBGs, and frequency-hopping transmission is performed on the plurality of CBs or the plurality of CBGs. In such a manner of performing frequency-hopping transmission at a CB level, channel encoding and transmission only need to be performed on each CB or each CBG, and each CB or each CBG may be discarded after being transmitted, thereby effectively lowering a requirement of the terminal device on a storage capability. When uplink transmission of the plurality of CBs is enabled by transmitting the plurality of CBs at a plurality of frequencies, uplink transmission is performed on different frequency selective channels; and a frequency diversity gain can be obtained by demodulating a plurality of CBs during uplink receiving. Therefore, according to this method, power consumption of the terminal device can be reduced, and transmission performance of uplink transmission performed when uplink transmission of a large TB is performed and channel encoding and interleaving are not performed can be ensured.

With reference to the first aspect, in some implementations of the first aspect, the plurality of frequency domain resources are located on two sides of a carrier or a bandwidth part (bandwidth part, BWP) on which the terminal device operates.

In this way, transmission of other information can be prevented from being affected because a large quantity of frequency domain resources are occupied by frequency-hopping transmission performed on a plurality of CBs or a plurality of CBGs.

With reference to the first aspect, in some implementations of the first aspect, the method further includes: determining the TB; receiving third information, where the third information indicates a quantity N of the plurality of CBs or the plurality of CBGs, and N is an integer greater than 1; and dividing the TB into N CBs or N CBGs based on the third information.

With reference to the first aspect, in some implementations of the first aspect, the method further includes: sending fourth information, where the fourth information includes at least one of the following information: whether the terminal device has a frequency-hopping transmission capability, a frequency hopping range within the carrier or the BWP on which the terminal device operates, an energy storage level of the terminal device, a power consumption level of the terminal device, an energy storage level of the terminal device, or a type of the terminal device.

Optionally, the type of the terminal device includes a terminal device that has a capability of actively sending a carrier or a terminal device that does not have a capability of actively sending a carrier.

Optionally, the type of the terminal device is a terminal device that has a capability of actively sending a carrier and whose maximum tolerable carrier frequency error is greater than 0.1 parts per million (parts per million, ppm).

In this way, a network device side may adaptively adjust, based on the fourth information, for example, an actual energy storage level of the terminal device, a quantity of CBs or a quantity of CBGs transmitted by a terminal and a size of each CB or each CBG, so that the terminal device can adaptively adjust maximum duration of each transmission. This ensures uplink transmission performance of the terminal device.

According to a second aspect, this application provides an uplink signal transmission method. The method may be applied to a network device. For example, the method may be performed by the network device, or may be performed by a component (for example, a chip or a chip system) configured in the network device, or may be implemented by a logical module or software that can implement all or a part of functions of the network device. This is not limited in this application.

For example, the method includes: sending first information, where the first information indicates to perform frequency-hopping transmission on a plurality of CBs or a plurality of CBGs, the plurality of CBs or the plurality of CBGs belong to one TB, one CBG includes a plurality of CBs, and N is an integer greater than 1; and receiving the plurality of CBs or the plurality of CBGs on a plurality of frequency domain resources through frequency hopping, where the plurality of frequency domain resources correspond to different frequencies.

For descriptions of the CB and the CBG, refer to the first aspect. Details are not described herein again.

In this application, a to-be-transmitted TB is divided into a plurality of CBs or a plurality of CBGs, and frequency-hopping transmission is performed on the plurality of CBs or the plurality of CBGs. In such a manner of performing frequency-hopping transmission at a CB level, channel encoding and transmission only need to be performed on each CB or each CBG, and each CB or each CBG may be discarded after being transmitted, thereby effectively lowering a requirement of a terminal device on a storage capability. When uplink transmission of the plurality of CBs is enabled by transmitting the plurality of CBs at a plurality of frequencies, uplink transmission is performed on different frequency selective channels; and a frequency diversity gain can be obtained by demodulating a plurality of CBs during uplink receiving. Therefore, according to this method, power consumption of the terminal device can be reduced, and transmission performance of uplink transmission performed when uplink transmission of a large TB is performed and channel encoding and interleaving are not performed is ensured.

With reference to the second aspect, in some implementations of the second aspect, the method further includes: sending second information, where the second information indicates frequency domain positions of the plurality of frequency domain resources.

For descriptions of the second information, refer to the first aspect. Details are not described herein again.

With reference to the second aspect, in some implementations of the second aspect, the plurality of frequency domain resources are located on two sides of a carrier or a bandwidth part BWP on which a terminal device operates. In this way, transmission of other data can be prevented from being affected because a large quantity of frequency domain resources are occupied by frequency-hopping transmission performed on a plurality of CBs or a plurality of CBGs.

With reference to the second aspect, in some implementations of the second aspect, the method further includes: sending third information, where the third information indicates a quantity N of the plurality of CBs or the plurality of CBGs, and N is an integer greater than 1.

With reference to the second aspect, in some implementations of the second aspect, the method further includes: receiving fourth information, where the fourth information includes at least one of the following information: whether the terminal device has a frequency-hopping transmission capability, a frequency hopping range within the carrier or the BWP on which the terminal device operates, a power consumption level of the terminal device, an energy storage level of the terminal device, or a type of the terminal device.

For descriptions of the type of the terminal device, refer to the descriptions of the first aspect. Details are not described herein again.

With reference to the second aspect, in some implementations of the second aspect, the network device determines a value of N and/or a size of each of the plurality of CBs or a size of each of the plurality of CBGs based on the fourth information.

Based on this, a network device side may adaptively adjust, based on the fourth information, for example, an actual energy storage level of the terminal device, a quantity of CBs or a quantity of CBGs transmitted by a terminal and a size of each CB or each CBG, so that the terminal device can adaptively adjust maximum duration of each transmission. This ensures uplink transmission performance of the terminal device.

According to a third aspect, this application provides an uplink signal transmission method. The method may be applied to a terminal device. For example, the method may be performed by the terminal device, or may be performed by a component (for example, a chip or a chip system) configured in the terminal device, or may be implemented by a logical module or software that can implement all or a part of functions of the terminal device. This is not limited in this application.

For example, the method includes: receiving first information, where the first information indicates to perform out-of-order transmission on a plurality of CBs or a plurality of CBGs, the plurality of CBs or the plurality of CBGs belong to one TB, and the one CBG includes a plurality of CBs; and sending the plurality of CBs or the plurality of CBGs in a transmission sequence of the plurality of CBs or the plurality of CBGs.

For descriptions of the CB or the CBG, refer to related descriptions of the first aspect. Details are not described herein again.

For example, when one TB is divided into a plurality of CBs, the first information indicates to perform out-of-order transmission on the plurality of CBs; or when one TB is divided into a plurality of CBGs, the first information indicates to perform out-of-order transmission on the plurality of CBGs.

Optionally, the transmission sequence of the plurality of CBs or the plurality of CBGs may be predefined in a protocol, or may be configured by a network device for the terminal device.

For example, when the transmission sequence of the plurality of CBs or the plurality of CBGs is configured by the network device for the terminal device, the method may further include: The terminal device receives second information, where the second information indicates the transmission sequence of the plurality of CBs or the plurality of CBGs; and the terminal device determines the transmission sequence of the plurality of CBs or the plurality of CBGs based on the second information. The transmission sequence of the plurality of CBs or the plurality of CBGs may be interleaved transmission.

In this embodiment of this application, a to-be-transmitted TB is divided into a plurality of CBs or a plurality of CBGs, and out-of-order transmission is performed on the plurality of CBs or the plurality of CBGs. In such a manner of performing out-of-order transmission at a CB level, channel encoding and transmission only need to be performed on each CB or each CBG, and storage needs to be performed for only a limited period of time after transmission is completed, thereby effectively lowering a requirement of the terminal device on a storage capability. Therefore, according to the method, power consumption of the terminal device can be reduced, and transmission performance of uplink transmission performed when channel encoding and interleaving are not performed on a TB with a large transmission length.

With reference to the third aspect, in some implementations of the third aspect, the method further includes: The terminal device determines the TB; the terminal device receives third information, where the third information indicates a quantity N of the plurality of CBs or the plurality of CBGs, and N is an integer greater than 1; and the terminal device divides the TB into N CBs or N CBGs based on the third information.

With reference to the third aspect, in some implementations of the third aspect, the method further includes: sending fourth information, where the fourth information includes at least one of the following information: whether the terminal device has a frequency-hopping transmission capability, a frequency hopping range within the carrier or the BWP on which the terminal device operates, a power consumption level of the terminal device, an energy storage level of the terminal device, or a type of the terminal device.

For descriptions of the type of the terminal device, refer to the descriptions of the first aspect. Details are not described herein again.

In this way, a network device side may adaptively adjust, based on the fourth information, for example, an actual energy storage level of the terminal device, a quantity of CBs or a quantity of CBGs transmitted by a terminal and a size of each CB or each CBG, so that the terminal device can adaptively adjust maximum duration of each transmission. This ensures uplink transmission performance of the terminal device.

According to a fourth aspect, this application provides an uplink signal transmission method. The method may be applied to a network device. For example, the method may be performed by the network device, or may be performed by a component (for example, a chip or a chip system) configured in the network device, or may be implemented by a logical module or software that can implement all or a part of functions of the network device. This is not limited in this application.

For example, the method includes: The network device sends first information, where the first information indicates to perform out-of-order transmission on a plurality of CBs or a plurality of CBGs, the plurality of CBs or the plurality of CBGs belong to one TB, and the one CBG includes a plurality of CBs; and the network device receives the plurality of CBs or the plurality of CBGs in a transmission sequence of the plurality of CBs or the plurality of CBGs.

For descriptions of the CB and the CBG, refer to the descriptions of the third aspect. Details are not described herein again.

In this embodiment of this application, a to-be-transmitted TB is divided into a plurality of CBs or a plurality of CBGs, and out-of-order transmission is performed on the plurality of CBs or the plurality of CBGs. In such a manner of performing out-of-order transmission at a CB level, channel encoding and transmission only need to be performed on each CB or each CBG, and storage needs to be performed for only a limited period of time after transmission is completed, thereby effectively lowering a requirement of the terminal device on a storage capability. Therefore, according to the method, power consumption of the terminal device can be reduced, and transmission performance of uplink transmission performed when channel encoding and interleaving are not performed on a TB with a large uplink transmission length.

With reference to the fourth aspect, in some implementations of the fourth aspect, the method further includes: The network device sends second information, where the second information indicates the transmission sequence of the plurality of CBs or the plurality of CBGs.

For example, the second information indicates a sequence number sorting pattern of the plurality of CBs or the plurality of CBGs, or the second information indicates interleaved transmission of the plurality of CBs or the plurality of CBGs.

With reference to the fourth aspect, in some implementations of the fourth aspect, the method further includes: The network device sends third information, where the third information indicates a quantity N of the plurality of CBs or the plurality of CBGs, and N is an integer greater than 1.

With reference to the fourth aspect, in some implementations of the fourth aspect, the method further includes: The network device receives fourth information, where the fourth information includes at least one of the following information: whether the terminal device has a frequency-hopping transmission capability, a frequency hopping range within the carrier or the BWP on which the terminal device operates, a power consumption level of the terminal device, an energy storage level of the terminal device, or a type of the terminal device.

For descriptions of the type of the terminal device, refer to the descriptions of the first aspect. Details are not described herein again.

With reference to the fourth aspect, in some implementations of the fourth aspect, the network device determines a value of N and/or a size of each of the plurality of CBs or a size of each of the plurality of CBGs based on the fourth information.

Based on this, a network device side may adaptively adjust, based on the fourth information, for example, an actual energy storage level of the terminal device, a quantity of CBs or a quantity of CBGs transmitted by a terminal and a size of each CB or each CBG, so that the terminal device can adaptively adjust maximum duration of each transmission. This ensures uplink transmission performance of the terminal device.

According to a fifth aspect, this application provides a transmission method. The method may be applied to a terminal device. For example, the method may be performed by the network device, or may be performed by a component (for example, a chip or a chip system) configured in the network device, or may be implemented by a logical module or software that can implement all or a part of functions of the network device. This is not limited in this application.

For example, the method includes: determining a TB; receiving third information, where the third information indicates a quantity N of a plurality of CBs or a plurality of CBGs, and N is an integer greater than 1; and dividing the TB into N CBs or N CBGs based on the third information.

With reference to the fifth aspect, in some implementations of the fifth aspect, the method further includes: sending fourth information, where the fourth information includes at least one of the following: whether the terminal device has a frequency-hopping transmission capability, a frequency hopping range within the carrier or the BWP on which the terminal device operates, a power consumption level of the terminal device, an energy storage level of the terminal device, or a type of the terminal device.

For descriptions of the type of the terminal device, refer to the descriptions of the first aspect. Details are not described herein again.

According to a sixth aspect, this application provides a transmission method. The method may be applied to a network device. For example, the method may be performed by the network device, or may be performed by a component (for example, a chip or a chip system) configured in the network device, or may be implemented by a logical module or software that can implement all or a part of functions of the network device. This is not limited in this application.

For example, the method includes: The network device sends third information, where the third information indicates a quantity N of a plurality of CBs or a plurality of CBGs, and N is an integer greater than 1.

With reference to the sixth aspect, in some implementations of the sixth aspect, the method further includes: receiving fourth information, where the fourth information includes at least one of the following: whether the terminal device has a frequency-hopping transmission capability, a frequency hopping range within the carrier or the BWP on which the terminal device operates, a power consumption level of the terminal device, an energy storage level of the terminal device, or a type of the terminal device.

For descriptions of the type of the terminal device, refer to the descriptions of the first aspect. Details are not described herein again.

With reference to the sixth aspect, in some implementations of the sixth aspect, the method further includes: determining a value of N and/or a size of each of the plurality of CBs or a size of each of the plurality of CBGs based on the fourth information.

According to a seventh aspect, this application provides a communication apparatus, including a module or a unit configured to implement the method according to any aspect and any possible implementation of the any aspect. It should be understood that each module or unit may implement a corresponding function by executing a computer program.

According to an eighth aspect, this application provides a communication apparatus, including a processor. The processor is configured to perform the method according to any aspect and any possible implementation of the any aspect.

The apparatus may further include a memory, configured to store instructions and data. The memory is coupled to the processor, and when executing the instructions stored in the memory, the processor may implement the method described in the foregoing aspects.

The apparatus may further include a communication interface. The communication interface is used by the apparatus to communicate with another device. For example, the communication interface may be a transceiver, a circuit, a bus, a module, or another type of communication interface.

According to a ninth aspect, this application provides a chip system. The chip system includes at least one processor, configured to support implementation of a function according to any aspect and any possible implementation of the any aspect, for example, receiving or processing data and/or information in the foregoing method.

In a possible design, the chip system further includes a memory, the memory is configured to store program instructions and data, and the memory is located inside or outside the processor.

The chip system may include a chip, or may include a chip and another discrete component.

According to a tenth aspect, this application provides a computer-readable storage medium, including a computer program. When the computer program is run on a computer, the computer is enabled to implement the method according to any aspect and any possible implementation of the any aspect.

According to an eleventh aspect, this application provides a computer program product. The computer program product includes a computer program (which may also be referred to as code or instructions). When the computer program is run, a computer is enabled to perform the method according to any aspect and any possible implementation of the any aspect.

According to a twelfth aspect, this application provides a communication system, including the foregoing terminal device and the foregoing network device.

It should be understood that, technical solutions of the seventh aspect to the twelfth aspect of this application correspond to those of the first aspect to the sixth aspect of this application, and beneficial effects achieved by the aspects and corresponding feasible implementations are similar. Details are not described again.

## BRIEF DESCRIPTION OF DRAWINGS

FIG. 1 is a diagram of an architecture of a communication system applicable to a method according to an embodiment of this application;
FIG. 2 is a diagram of an encoding circuit;
FIG. 3 is a diagram of a rate matching processing procedure;
FIG. 4 and FIG. 5 each are a schematic flowchart of an uplink transmission method according to an embodiment of this application;
FIG. 6 and FIG. 7 each are a block diagram of a communication apparatus according to an embodiment of this application;
FIG. 8 is a diagram of a structure of a terminal device according to an embodiment of this application; and
FIG. 9 is a diagram of a structure of a radio access network device according to an embodiment of this application.

## DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a worldwide interoperability for microwave access (worldwide interoperability for microwave access, WiMAX) communication system, a 5th generation (5th generation, 5G) mobile communication system or a new radio access technology (new radio access technology, NR), and a satellite communication system. The 5G mobile communication system may include non-standalone (non-standalone, NSA) networking and/or standalone (standalone, SA) networking.

The technical solutions provided in this application may be further applied to a future communication system, for example, a 6th generation (6th generation, 6G) mobile communication system. This is not limited in this application.

The technical solutions provided in this application may be further applied to service scenarios such as backscatter communication and passive internet of things communication in an NR communication system.

A radio access network (radio access network, RAN) device in this application is a device having a wireless transceiver function. The radio access network device may provide a wireless communication function service, and may connect a terminal to a radio network. The radio access network device may be a node in a radio access network, referred to as a RAN node for short.

In a possible scenario, the RAN node may be a base station (base station, BS), an evolved NodeB (evolved NodeB, eNodeB), a transmission reception point (transmission reception point, TRP), a home NodeB (home evolved NodeB or home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation NodeB in a 6G mobile communication system, a base station in a future mobile communication system, or the like. Alternatively, the RAN node may be a device that functions as a base station in a device-to-device (device-to-device, D2D) communication system, a vehicle-to-everything (vehicle-to-everything, V2X) communication system, a machine-to-machine (machine-to-machine, M2M) communication system, or an internet of things (internet of things, IoT) communication system. Alternatively, the RAN node may be a RAN node in a non-terrestrial network (non-terrestrial network, NTN). In other words, the RAN node may be deployed on a high-altitude platform or a satellite. The RAN node may be a macro base station, or may be a micro base station or an indoor base station, or may be a relay node, a donor node, or the like, or may be a radio controller in a cloud radio access network (cloud radio access network, CRAN) scenario, a node in an open radio access network (open radio access network, O-RAN or ORAN) scenario, or the like. Optionally, the RAN node may alternatively be a server, a wearable device, a vehicle, a vehicle-mounted device, or the like. For example, a RAN node in a V2X technology may be a roadside unit (roadside unit, RSU). Certainly, the RAN node may alternatively be a node in a core network.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU).

Any one of the CU (or the CU-CP or the CU-UP), the DU, and the RU may be implemented by using a software module, a hardware module, or a combination of a software module and a hardware module. In other words, the radio access network device in this application may be a virtualized device, for example, implemented by using general-purpose hardware and an instantiated virtualization function, or by using dedicated hardware and an instantiated virtualization function. The general-purpose hardware may be a server, for example, a cloud server.

A terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device with a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to operate with other devices such as smartphones, such as various smart bands or smart jewelry for monitoring physical signs.

In addition, the terminal device may alternatively be a terminal device in an IoT system. An IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

The terminal device may be a virtualized device, for example, implemented by using general-purpose hardware and an instantiated virtualization function, or by using dedicated hardware and an instantiated virtualization function. The general-purpose hardware may be a server, for example, a cloud server.

The terminal device may be a passive terminal device having an envelope detector receiver, a passive IoT terminal device, a semi-passive terminal device, a semi-passive IoT terminal device, a terminal device having a backscatter capability, an NR terminal device, an NR base station/pole site/micro base station/small cell, a reader/writer terminal device, or the like.

It should be understood that a specific form of the radio access network device and a specific form of the terminal device are not limited in this application.

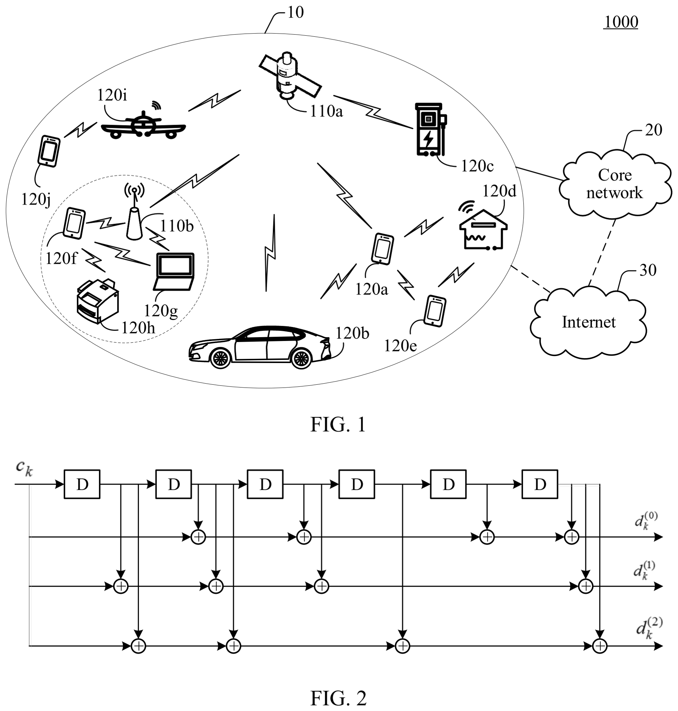

FIG. 1 is a diagram of an architecture of a communication system 1000 applicable to a method according to an embodiment of this application. As shown in FIG. 1, the communication system 1000 includes a radio access network 10 and a core network 20. Optionally, the communication system 1000 may further include the internet 30. The radio access network 10 may include at least one radio access network device (for example, 110a and 110b in FIG. 1), and may further include at least one terminal (for example, 120a to 120j in FIG. 1).

The terminal may be connected to the radio access network device in a wireless manner, and the radio access network device may be connected to the core network in a wireless or wired manner. A core network device and a radio access network device may be different independent physical devices, or functions of the core network device and logical functions of the radio access network device may be integrated into a same physical device, or a part of functions of the core network device and a part of functions of the radio access network device may be integrated into one physical device. A wired or wireless manner may be used for a connection between terminals and a connection between radio access network devices.

Communication between a radio access network device and a terminal, between radio access network devices, and between terminals may be performed by using a licensed spectrum, an unlicensed spectrum, or both a licensed spectrum and an unlicensed spectrum, and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

The radio access network device may be a base station deployed in the air, for example, may be a satellite base station 110a; or may be a base station deployed indoors, for example, may be a micro base station or indoor base station 110b.

The terminal may be a terminal deployed in the air, for example, a helicopter or uncrewed aerial vehicle 120i in FIG. 1; or may be a terminal deployed on the ground, for example, a mobile phone 120a, a mobile phone 120e, a mobile phone 120f, a mobile phone 120j, a vehicle 120b, a computer 120g, or a printer 120h in FIG. 1.

The radio access network device and the terminal may be at fixed positions, or may move. For example, the radio access network device and the terminal may be deployed on land, including an indoor device, an outdoor device, a handheld device, or a vehicle-mounted device; or may be deployed on water; or may be deployed on an airplane, a balloon, or an artificial satellite in the air.

Roles of the radio access network device and the terminal may be relative. For example, the helicopter or uncrewed aerial vehicle 120i in FIG. 1 may be configured as a mobile base station. For 120j that accesses the radio access network 100 via 120i, 120i is a base station, while for 110a, 120i is a terminal, that is, 110a and 120i communicate with each other by using a radio air interface protocol. Certainly, 110a and 120i may alternatively communicate with each other by using an interface protocol between radio access network devices. In this case, for 110a, 120i is also a base station. Therefore, both the radio access network device and the terminal device may be collectively referred to as a communication device. 110a, 110b, and 120a to 120j in FIG. 1 may be referred to as communication devices having respective corresponding functions, for example, a communication device having a base station function or a communication device having a terminal function.

It should be understood that, FIG. 1 is merely a diagram. The communication system may further include other devices, for example, may further include a wireless relay device and a wireless backhaul device, which are not shown in FIG. 1.

As machine-type communication (machine-type communication, MTC) and internet of things (internet of things, IoT) in 5G NR communication are increasingly widely applied, a quantity of connected IoT devices is also increasing day by day. Consequently, the industry has an increasingly strong requirement for reducing costs and power consumption of the IoT devices.

In a 4G era, a 3rd generation partnership project (3rd generation partnership project, 3GPP) introduces a narrowband IoT (narrowband IoT, NB-IoT) system. However, an NB-IoT terminal further requires an overall external battery power supply, and has a capability of generating a local high-frequency local oscillator carrier. Therefore, such a type of terminal may only have power consumption at a milliwatt level.

For a purpose of connecting all things through the 5G IoT, a current 5G/5.5G+ research focuses on whether to enable a terminal device to access a 5G network and perform effective communication in the 5G network, where the terminal device does not require continuous external power supply and passively receives an external radio frequency signal as local energy supply, or performs a passive/semi-passive terminal power supply manner in combination with another energy harvesting manner. Currently, passive internet of things/backscatter communication is an important research direction in the 5G or 5.5G internet of things field. In a passive internet of things system, terminals may perform backscatter (backscatter) communication, and may be conventionally defined as tags, which further include a passive tag and a semi-passive tag. The terminal may also be defined as a terminal device that performs backscatter communication.

A terminal device that is a passive tag or performs passive backscatter communication has no power supply device or functional circuit. The terminal device obtains energy supply by merely receiving a radio frequency signal sent by a network device on a downlink and obtaining a direct current voltage through a series of circuits such as a filter circuit, to enable further demodulation of a subsequent downlink signal and reflection of a subsequent uplink (modulation) signal. The network device herein may be a reader/writer device (reader), an assistant device (helper), or a series of network devices that can stimulate a passive/semi-passive terminal device. Due to limitations on power consumption and complexity of a passive internet of things terminal device/backscatter communication terminal device, power consumption of this type of terminal may be limited to target power consumption less than 1 microwatt ($\mu$W) or less than 100 $\mu$W. In a case of the target power consumption, it is difficult for the passive internet of things terminal device to implement complex channel encoding. For example, it is difficult for the passive internet of things terminal device to implement a complex operation or store a large amount of information in a memory. Therefore, simple channel encoding needs to be implemented to improve coverage of the passive internet of things terminal device.

The following describes a channel encoding procedure by using a channel encodingconvolutional code (convolutional code, CC) with a classic communication principle as an example. In an LTE system, a convolutional code is used for both a downlink control channel (physical downlink control channel, PDCCH) and an NB-IoT downlink shared channel (physical downlink shared channel, PDSCH). A length of the convolutional code used in the LTE system is limited to 7, a quantity of registers is equal to 6, and a bitrate is 1/3, that is, 1 bit is encoded into 3 bits. In an encoding circuit shown in FIG. 2, each branch corresponds to one generator polynomial. To be specific, an exclusive OR operation is performed between an input bit value and several bit values in six registers to obtain one encoded bit value. For example, if one bit sequence $c_K$ is input into the encoding circuit shown in FIG. 2, three bit sequences: $d_1^{(0)}$, $d_1^{(1)}$, and $d_1^{(2)}$ may be obtained.

In addition, a tail biting convolutional code (tail biting convolutional code, TBCC) is used in the LTE system. An initial register state of the TBCC is set to last 6 bits in to-be-sent bits. In this way, after final encoding, a register state returns to the last 6 bits in the to-be-sent bits. For example, a quantity of bits input into a register is defined as $K$, an input bit sequence is $c_0, c_1, c_2, ..., c_{K-1}$, and an initial state of the register is a register $s_i$, where $i = 0,1, ...,5$. For the TBCC, a value of the initial state $s_i$ is $s_i = c_{K-1-i}$.

In a convolutional encoding process, when a new bit is input, values of registers are shifted rightward (a value of a last register is discarded), and a previous input bit value is shifted rightward to a 1st register as a value of the 1st register. For example, the initial register state is $c_{K-1}, c_{K-2}, c_{K-3}, ..., c_{K-6}$, a 1st bit $c_0$ in the input bit sequence enters an encoder, and output encoded bits are $d_0^{(0)}$, $d_0^{(1)}$, and $d_0^{(2)}$. When a 2nd bit $c_1$ in the input bit sequence enters the encoder, the register state is updated to $c_0, c_{K-1}, c_{K-2}, ..., c_{K-5}$, and output encoded bits are $d_1^{(0)}$, $d_1^{(1)}$, and $d_1^{(2)}$. After three branches of output bit sequences are generated, rate matching needs to be performed on output bits. Rate matching includes processes such as block interleaving, bit collection, and bit selection.

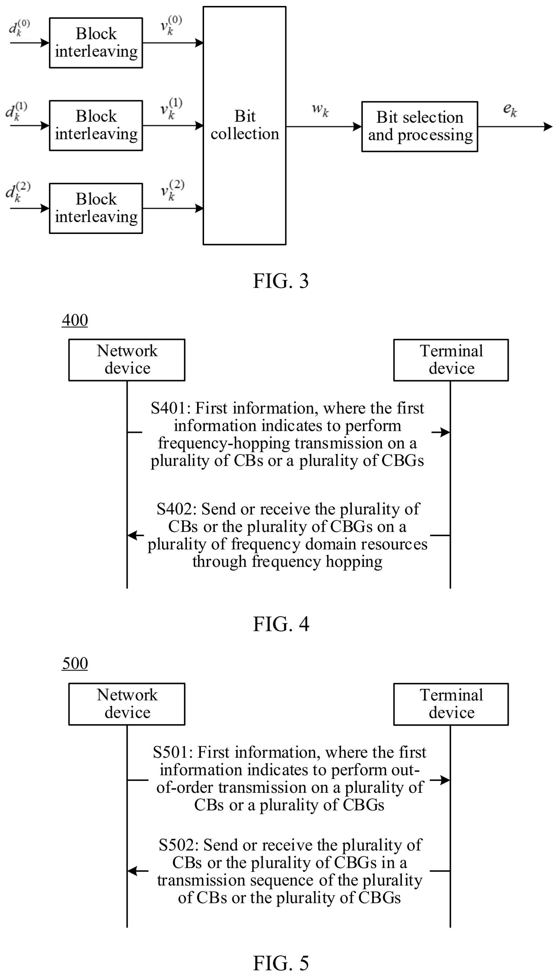

FIG. 3 shows a rate matching processing procedure. As shown in FIG. 3, each branch of output bit sequence first enters a block interleaver for interleaving. Each branch of block interleaver is set to R rows and C columns, where C is equal to 32 by default. It is assumed that a quantity of bits in the output bit sequence is defined as D. When D is less than R×C, R×C-D bits are padded (padding) before the output bit sequence, and a value is <NULL> (a value of NULL may be simply 0) to meet a requirement that the bit sequence enters the R×C interleaver for interleaving. In addition, the bit sequence is input into the R×C interleaver by row, and column permutation is performed on a 32-column bit sequence in the interleaver, so that column permutation satisfies a column permutation pattern (pattern) shown in Table 1.

Table 1

| Quantity of columns | Column permutation pattern |
|---|---|
| 32 | <0, 16, 8, 24, 4, 20, 12, 28, 2, 18, 10, 26, 6, 22, 14, 30, 1, 17, 9, 25, 5, 21, 13, 29, 3, 19, 11, 27, 7, 23, 15, 31> |

After column permutation, R×C bits are output by column, and an obtained output bit sequence is $v_k^{(0)}, v_k^{(1)}, v_k^{(2)}$. Then, the output bit sequence is input into a memory. Bits in a bit sequence output after bit collection are defined as $w_k$. In this case, $w_k$ satisfies:

$$w_k = w_D + w_{D+d} + w_{D+2d}$$

$$w_D = v_k^{(0)}; \ w_{D+d} = v_k^{(1)}; \text{ and } w_{D+2d} = v_k^{(2)}, \text{ where } d = 0, ..., R \times C - 1.$$

However, for a passive tag, to perform the foregoing complex interleaving procedure, a very large memory and computing overheads are required. It is very likely that an ambient internet of things (ambient-IoT, A-IoT) terminal (for example, a passive (passive) tag <1 μW, and an active (active) tag <5 mW) with limited power consumption cannot implement such large storage overheads and computing implementation complexity.

Therefore, it is mentioned in the related technology that a rate matching operation may not be performed after encoding, to reduce complexity and computing overheads of channel encoding. For example, an initial register state is set to six specific state values. After 1 bit in an input bit sequence enters an encoder and three branches of generator polynomials are generated, 3 bits are output simultaneously. There is no need to collect, for an interleaving operation, all bits obtained by encoding one branch, and the 3 encoded bits may be sent. Then, 1 bit in one input bit sequence enters the encoder to repeat the foregoing process. If a bit in an output bit sequence is $w_k$, the bit in the output bit sequence may be represented as follows:

$$w_{3k} = d_k^{(0)}$$

$$w_{3k+1} = d_k^{(1)}$$

$$w_{3k+2} = d_k^{(2)}$$

Herein, k = 0, ..., K - 1.

It can be learned that such a manner of "sending while encoding" may effectively simplify a storage requirement of a terminal device. However, when interleaving is not performed at all, if a small TBS is transmitted on an uplink, impact on performance of channel encoding is small. Because a time diversity gain brought through interleaving is not clear, if a large TBS is transmitted on the uplink, performance of channel encoding is large. In this case, a time diversity gain brought through interleaving is large. Therefore, if interleaving of channel encoding is not performed, when a large TB is transmitted on the uplink, performance of channel encoding greatly deteriorates, and uplink transmission performance deteriorates.

In view of this, this application provides an uplink signal transmission method and a related apparatus. In the method, a large TB is divided into a plurality of CBs or a plurality of CBGs, and frequency-hopping transmission is performed on the plurality of CBs or the plurality of CBGs. When frequency-hopping transmission is performed at a CB level, channel encoding only needs to be performed on each CB or each CBG, and each CB or each CBG may be discarded after being transmitted, without buffering the entire TB. Therefore, the method can effectively reduce power consumption of a low-power terminal device, and can ensure transmission performance of transmitting a large TB.

For ease of understanding of embodiments of this application, the following descriptions are first provided.

First, in embodiments of this application, prefix words such as "first" and "second" are merely used for distinguishing and describing different things belonging to a same name category, and are not intended to limit a sequence, sizes, or a quantity of things. For example, "first information" and "second information" are merely different information, and have no time sequence relationship, a magnitude relationship, or a priority relationship.

Second, "sending" and "receiving" in embodiments of this application indicate signal transfer directions. For example, "sending the first information" may be understood as that a destination of the information is a terminal device, and may include direct sending through an air interface, or indirect sending by another unit or module through an air interface. "Receiving the first information" may be understood as that a source end of the configuration information is a network device, and may include direct receiving from the network device through an air interface, or indirect receiving from the network device from another unit or module through the air interface. "Sending" may alternatively be understood as "outputting" from a chip interface, and "receiving" may alternatively be understood as "inputting" into the chip interface.

In other words, sending and receiving may be performed between devices, for example, between a terminal device and a network device; or sending or receiving may be performed inside a device, for example, between components, modules, chips, software modules, or hardware modules inside the device through a bus, a cable, or an interface.

It may be understood that, before the information is sent from the source to the destination, necessary processing such as encoding and modulation may be performed. After receiving the information from the source, the destination may also perform corresponding processing such as decoding and demodulation, to interpret valid information from the source. Similar descriptions in this application may be understood similarly, and details are not described again.

Third, in embodiments of this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually represents an "or" relationship between the associated objects, but does not exclude an "and" relationship between the associated objects. A specific meaning represented by the character "/" may be understood with reference to the context. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth. In embodiments of this application, the term "indication" may include a direct indication and an indirect indication, or may include an explicit indication and an implicit indication. Information indicated by specific information (for example, the following first information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application.

It may be understood that, for a sender of the indication information, the indication information may indicate to-be-indicated information, and for a receiver of the indication information, the indication information may be for determining to-be-indicated information.

Fifth, in embodiments of this application, descriptions such as "when...", "in a case of ...", "assuming that", and "if" all mean that a device (for example, a network device or a terminal device) performs corresponding processing in an objective case, are not intended to limit time, do not require the device (for example, a network device or a terminal device) to necessarily perform a determining action during implementation, and do not mean another limitation.

Sixth, storage in this application may mean storage in one or more memories. The one or more storages may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the storage may be a storage medium in any form. This is not limited in this application.

With reference to FIG. 4 and FIG. 5, the following describes in detail the method provided in embodiments of this application. The method may be applied to the communication system shown in FIG. 1. However, this is not limited in embodiments of this application.

In flowcharts shown in FIG. 4 and FIG. 5, the method is shown from a perspective of interaction between communication devices. However, an execution body of the method is not limited in this application. For example, the terminal device in FIG. 4 and FIG. 5 may be a chip, a chip system, or a processor that supports the terminal device to implement the method, or may be a logical module or software that can implement a part or all of functions of the terminal device; and the network device in FIG. 4 and FIG. 5 may be a chip, a chip system, or a processor that supports the network device to implement the method, or may be a logical module or software that can implement a part or all of functions of the network device.

FIG. 4 is a schematic flowchart of an uplink signal transmission method 400 according to an embodiment of this application. As shown in FIG. 4, the method 400 may include S401 and S402. The following describes in detail steps shown in FIG. 4.

S401: A network device sends first information to a terminal device, where the first information indicates to perform frequency-hopping transmission on a plurality of code blocks (code block, CB) or a plurality of code block groups (code block group, CBG). Correspondingly, the terminal device receives the first information.

The plurality of CBs belong to one TB, or the plurality of CBGs belong to one TB. In other words, one TB may be divided into a plurality of CBs or a plurality of CBGs, and one CBG may include one CB or a plurality of CBs. For example, when one TB is divided into a plurality of CBs, the first information indicates to perform frequency-hopping transmission on the plurality of CBs; or when one TB is divided into a plurality of CBGs, the first information indicates to perform frequency-hopping transmission on the plurality of CBGs.

It should be understood that one TB may alternatively be divided into at least one CB and at least one CBG. In this case, the first information indicates to perform frequency-hopping transmission on the at least one CB and the at least one CBG.

It should be further understood that different CBGs in the plurality of CBGs may include a same quantity of CBs or different quantities of CBs. For example, when one TB is divided into two CBGs, a CBG 1 includes two CBs, and a CBG 2 includes three CBs.

It should be further understood that the first information may be carried in radio resource control (radio resource control, RRC) signaling, medium access control (medium access control, MAC) layer signaling, or downlink control information (downlink control information, DCI). The MAC layer signaling may be, for example, a MAC control element (control element, CE).

S402: The terminal device sends the plurality of CBs or the plurality of CBGs on a plurality of frequency domain resources through frequency hopping. Correspondingly, the network device receives the plurality of CBs and the plurality of CBGs on the plurality of frequency domain resources through frequency hopping.

The plurality of frequency domain resources correspond to different frequencies, or a plurality of frequencies that are in one-to-one correspondence with the plurality of frequency domain resources are different from each other.

It should be understood that a quantity of the plurality of frequency domain resources is the same as a quantity of the plurality of CBs or the plurality of CBGs that belong to one TB. In other words, one CB or one CBG may be sent on each frequency domain resource. For example, when one TB is divided into a plurality of CBs, the terminal device sends one CB on each frequency domain resource; or when one TB is divided into a plurality of CBGs, the terminal device sends one CBG on each frequency domain resource.

It should be further understood that in this application, the plurality of frequency domain resources used for frequency-hopping transmission may be located on two sides of a carrier or a BWP on which the terminal device operates. In this way, frequency domain resources that may be continuously occupied by transmission of other data can be prevented from being affected because a large quantity of frequency domain resources are occupied by frequency-hopping transmission performed on the plurality of CBs or the plurality of CBGs.

Optionally, the plurality of frequency domain resources may be predefined in a protocol or configured by the network device for the terminal device.

For example, if the plurality of frequency domain resources are configured by the network device for the terminal device, before S402, the method 400 may further include: The network device sends second information to the terminal device. The second information indicates frequency domain positions of the plurality of frequency domain resources.

Correspondingly, the terminal device receives the second information, and determines the plurality of frequency domain resources based on the second information. In other words, the network device may indicate, to the terminal device based on the second information, frequency domain resources on which the plurality of CBs or the plurality of CBGs are to be transmitted. For example, the second information includes a field of the frequency domain positions of the plurality of frequency domain resources, or includes a field of a frequency domain offset between the plurality of frequency domain resources, or includes a field of a frequency domain position pattern of frequency-hopping transmission between the plurality of CBs or the plurality of CBGs, or includes a start position of the frequency domain positions of frequency-hopping transmission between the plurality of CBs or the plurality of CBGs and a frequency interval value between the frequency domain positions of frequency-hopping transmission.

It should be understood that the second information may be carried in RRC signaling, MAC layer signaling, or DCI signaling.

In this embodiment of this application, a to-be-transmitted TB is divided into a plurality of CBs or a plurality of CBGs, and frequency-hopping transmission is performed on the plurality of CBs or the plurality of CBGs. In such a manner of performing frequency-hopping transmission at a CB level, channel encoding and transmission only need to be performed on each CB or each CBG, and each CB or each CBG may be discarded after being transmitted, thereby effectively lowering a requirement of the terminal device on a storage capability. When uplink transmission of the plurality of CBs is enabled by transmitting the plurality of CBs at a plurality of frequencies, uplink transmission is performed on different frequency selective channels; and a frequency diversity gain can be obtained by demodulating a plurality of CBs during uplink receiving. Therefore, according to this method, power consumption of the terminal device (for example, A-IoT) can be reduced, and transmission performance of uplink transmission performed when uplink transmission of a TB with a large length is performed and channel encoding and interleaving are not performed can be ensured.

With reference to FIG. 4, the foregoing describes a transmission method performed when frequency-hopping transmission is performed on a plurality of CBs or a plurality of CBGs. With reference to FIG. 5, the following describes in detail an uplink signal transmission method performed when out-of-order transmission is performed on a plurality of CBs or a plurality of CBGs. It should be understood that a plurality of CBs or a plurality of CBGs obtained by dividing one TB may have different numbers. For example, the plurality of CBs or the plurality of CBGs may be numbered in a sequence in which the plurality of CBs or the plurality of CBGs form one complete TB.

FIG. 5 is a schematic flowchart of another uplink signal transmission method 500 according to an embodiment of this application. As shown in FIG. 5, the method 500 may include S501 and S502. The following describes in detail steps shown in FIG. 5.

S501: A network device sends first information to a terminal device, where the first information indicates to perform out-of-order transmission on a plurality of CBs or a plurality of CBGs. Correspondingly, the terminal device receives the first information.

For descriptions of the CB or the CBG, refer to related descriptions in the method 400. Details are not described herein again.

For example, when one TB is divided into a plurality of CBs, the first information indicates to perform out-of-order transmission on the plurality of CBs; or when one TB is divided into a plurality of CBGs, the first information indicates to perform out-of-order transmission on the plurality of CBGs; or when one TB is divided into at least one CB and at least one CBG, the first information indicates to perform out-of-order transmission on the at least one CB and the at least one CBG.

The out-of-order transmission means that the plurality of CBs or the plurality of CBGs are not transmitted in a sequence in which the plurality of CBs or the plurality of CBGs are combined into one TB, or is understood as that the plurality of CBs or the plurality of CBGs are transmitted in a sequence in which original numbers are out of order. For example, if one TB is sequentially divided into a CBG 1, a CBG 2, a CBG 3, and a CBG 4, a correct transmission sequence is the CBG 1, the CBG 2, the CBG 3, and the CBG 4; and an out-of-order transmission sequence may be the CBG 2, the CBG 1, the CBG 3, and the CBG 4; or the CBG 2, the CBG 3, the CBG 1, and the CBG 4; or the CBG 4, the CBG 3, the CBG 1, and the CBG 1, or the like. Examples are not listed herein.

It should be understood that the first information may be carried in RRC signaling, MAC layer signaling, or DCI.

S502: The terminal device sends the plurality of CBs or the plurality of CBGs to the network device in a transmission sequence of the plurality of CBs or the plurality of CBGs. Correspondingly, the network device receives the plurality of CBs or the plurality of CBGs.

Optionally, the transmission sequence of the plurality of CBs or the plurality of CBGs may be predefined in a protocol, or may be configured by the network device for the terminal device.

For example, if the transmission sequence of the plurality of CBs or the plurality of CBGs is configured by the network device for the terminal device, before S502, the method 500 may further include: The network device sends second information to the terminal device. The second information indicates the transmission sequence of the plurality of CBs or the plurality of CBGs. Correspondingly, the terminal device receives the second information, and determines the transmission sequence of the plurality of CBs or the plurality of CBGs based on the second information. In other words, the network device may indicate, to the terminal device based on the second information, a CBG that is the first to be transmitted, a CBG that is the second to be transmitted, and the like in the plurality of CBGs. For example, the plurality of CBGs are four CBGs, and sequence numbers of the four CBGs are 0, 1, 2, and 3. In this case, the second information may indicate a sequence number sorting pattern of the plurality of CBGs, for example, {0, 3, 2, 1}. Alternatively, if the second information indicates to perform interleaved transmission on the plurality of CBs or the plurality of CBGs, the four CBGs are transmitted in a sequence of {0, 2, 1, 3}.

In this embodiment of this application, a to-be-transmitted TB is divided into a plurality of CBs or a plurality of CBGs, and out-of-order transmission is performed on the plurality of CBs or the plurality of CBGs. In such a manner of performing out-of-order transmission at a CB level, channel encoding and transmission only need to be performed on each CB or each CBG, and storage needs to be performed for only a limited period of time after transmission is completed, thereby effectively lowering a requirement of the terminal device on a storage capability. Therefore, according to the method, power consumption of the terminal device can be reduced, and transmission performance of uplink transmission performed when channel encoding and interleaving are not performed on a TB with a large uplink transmission length.

In an optional embodiment, before S401 (or S501), the method 400 (or the method 500) further includes: The terminal device determines the TB.

For example, when sending information data, the terminal device may divide information data from an upper layer (for example, a MAC layer) into a plurality of transport blocks based on a size of a transport block supported by a system, and add cyclic redundancy check (cyclic redundancy check, CRC) bits $p_0$, $p_1$, $p_2$, $p_3$, ..., $p_{L-1}$ of a same length to each transport block $a_0$, $a_1$, $a_2$, $a_3$, ..., $a_{A-1}$ to obtain a sequence $b_0$, $b_1$, $b_2$, $b_3$, ..., $b_{B-1}$ (that is, A+L=B, where when A is a bit length of a transport block $a_0$ and L is a length of $P_0$, B is a bit length of the sequence $b_0$). The obtained sequence $b_0$, $b_1$, $b_2$, $b_3$, ..., $b_{B-1}$ may be the TB in this application. That is, the foregoing process of obtaining the sequence $b_0$, $b_1$, $b_2$, $b_3$, ..., $b_{B-1}$ may be considered as a process in which the terminal device determines the TB in this application.

Optionally, the terminal device may further add one CRC to every M CBs (or CBGs) in N CBs (or N CBGs). Herein, M is an integer greater than 1 and less than N, and a value of M may be predefined in a protocol or configured by the network device for the terminal device.

For example, if the terminal device needs to add one CRC to every M CBs (or CBGs) in the N CBs (or the N CBGs), the terminal device may store a temporary CRC operation result when sending a 1st CB (or CBG), add a CRC when sending an Mth CB (or CBG), and add an entire TB-level CRC when sending an Nth CB or an Nth CBG.

In an optional embodiment, before S401 (or S501), the method 400 (or the method 500) further includes: The network device sends third information to the terminal device. The third information indicates a quantity N of the plurality of CBs or the plurality of CBGs, and N is an integer greater than 1. Correspondingly, the terminal device receives the third information, and divides the TB into N CBs or N CBGs based on the third information.

It should be understood that the third information may be carried in higher layer signaling, physical layer signaling, or MAC layer signaling. For descriptions of the higher layer signaling, the physical layer signaling, or the MAC layer signaling, refer to the foregoing descriptions. Details are not described herein again.

In an optional embodiment, before S401 (or S501), the method 400 (or the method 500) further includes: The terminal device sends fourth information to the network device. The fourth information includes at least one of the following: whether the terminal device has a frequency-hopping transmission capability, a frequency hopping range within a carrier or a BWP on which the terminal device operates, a power consumption level of the terminal device, an energy storage level of the terminal device, a type of the terminal device, or the like. Correspondingly, the network device receives the fourth information, and determines a value of N and/or a size of each of the plurality of CBs or a size of each of the plurality of CBGs based on the fourth information.

Optionally, the fourth information may further include a capability of the terminal device to perform backscatter communication by receiving a downlink carrier signal, a storage capability of the terminal device, an energy storage capability of the terminal device, and the like.

For example, the energy storage level reported by the terminal device may be an energy storage level 0, an energy storage level 1, an energy storage level 2, ...; the power consumption level reported by the terminal device may be a power consumption level 0, a power consumption level 1, a power consumption level 2, ...; and the type of the terminal may be an active type or a passive type. An active terminal is a terminal device that has a capability of actively sending a carrier, and a passive terminal is a terminal device that does not have a capability of actively sending a carrier.

Optionally, the active terminal may alternatively be a terminal device that has a capability of actively sending a carrier and whose maximum tolerable carrier frequency error is greater than 0.1 ppm.

For example, if the type reported by the terminal device is the passive type or that the terminal device does not have a capability of actively generating an uplink carrier, it indicates or configures that the quantity of the plurality of CBs or the plurality of CBGs is N1, and the size of each CB or each CBG is C1; or if the type reported by the terminal device is the active type or that the terminal device has a capability of actively generating an uplink carrier, it indicates or configures that the quantity of the plurality of CBs or the plurality of CBGs is N2, and the size of each CB or each CBG is C2. In this case, N1 is greater than N2, or a maximum configurable value of N1 is greater than a maximum configurable value of N2; or the size C1 of each CB or each CBG is less than C2, or a maximum configurable value of C1 is less than a maximum configurable value of C2. N1, N2, C1, and C2 are all positive integers.

For example, if the energy storage level reported by the terminal device is a level 0, it indicates or configures that the quantity of the plurality of CBs or the plurality of CBGs is N3, and the size of each CB or each CBG is C3. If the energy storage capability reported by the terminal device is a level 1, it indicates or configures that the quantity of the plurality of CBs or the plurality of CBGs is N4, and the size of each CB or each CBG is C4. In this case, N3 is greater than N4, or a maximum configurable value of N3 is greater than a maximum configurable value of N4; or the size C3 of each CB or CBG is less than C4, or a maximum configurable value of C3 is less than a maximum configurable value of C4. For example, if the energy storage level reported by the terminal device is a level 0, when an uplink TB is equal to 800 bits, it indicates or configures that the quantity of the plurality of CBs or the plurality of CBGs is 8, that is, the terminal device divides one TB into eight CBs or CBGs; or if the energy storage level reported by the terminal device is a level 1, when an uplink TB is equal to 800 bits, it indicates or configures that the quantity of the plurality of CBs or the plurality of CBGs may be a positive integer less than 8, for example, 4, that is, the terminal device divides one TB into four CBs or CBGs. N3, N4, C3, and C4 are all positive integers.

Alternatively, when receiving the fourth information, the network device may determine, based on the fourth information, whether to perform frequency-hopping transmission and/or out-of-order transmission.

In this application, the network device may adaptively configure the quantity of CBs or the quantity of CBGs based on capability information such as the energy storage level or the power consumption level of the terminal device, and adaptively adjust a size of a maximum bit transmitted by the terminal device each time. The terminal device may divide, based on information from the network device, a large TB into a plurality of CBs or a plurality of CBGs for transmission. Therefore, the method can ensure uplink transmission performance of a terminal device with all power consumption or energy storage levels.

It should be noted that the embodiments of the method 400 and the method 500 may be combined or independently implemented. When the embodiments of the method 400 and the method 500 are combined, the communication method provided in this application may include: The network device indicates the terminal device to perform out-of-order transmission and frequency-hopping transmission on the plurality of CBs or the plurality of CBGs, and the terminal device performs frequency-hopping transmission on a plurality of frequency domain resources in the transmission sequence of the plurality of CBs or the plurality of CBGs that is indicated by the network device. For a detailed procedure in which the embodiments of the method 400 and the method 500 are combined, refer to the foregoing descriptions with reference to the embodiments in FIG. 4 and FIG. 5. Details are not described again.

An embodiment of this application further provides a signal transmission method. The transmission method may include step 1 to step 3.

Step 1: A terminal device determines a TB.

For descriptions that the terminal device determines the TB, refer to the foregoing related descriptions. Details are not described herein again.

Step 2: A network device sends third information to the terminal device. Correspondingly, the terminal device receives the third information.

The third information indicates a quantity N of a plurality of CBs or a plurality of CBGs. Herein, N is an integer greater than 1.

For descriptions of the plurality of CBs or the plurality of CBGs, refer to the foregoing related descriptions. Details are not described herein again.

Step 3: The terminal device divides the TB into N CBs or N CBGs based on the third information.

For descriptions of the third information, refer to the foregoing related descriptions. Details are not described herein again.

Optionally, the transmission method further includes: The terminal device sends fourth information to the network device. Correspondingly, the network device receives the fourth information, and determines a value of N and/or a size of each of the plurality of CBs or a size of each of the plurality of CBGs based on the fourth information.

The fourth information includes at least one of the following: whether the terminal device has a frequency-hopping transmission capability, a frequency hopping range within a carrier or a BWP on which the terminal device operates, a power consumption level of the terminal device, an energy storage level of the terminal device, or a type of the terminal device.

For descriptions of the fourth information and how to determine N and/or the size of each CB (or the size of each CBG) based on the fourth information, refer to the foregoing related descriptions. Details are not described herein again.

It should be understood that sequence numbers of the foregoing processes do not mean execution sequences. The execution sequence of the processes should be determined based on functions and internal logic of the processes, and should not be construed as any limitation on implementation processes of embodiments of this application.

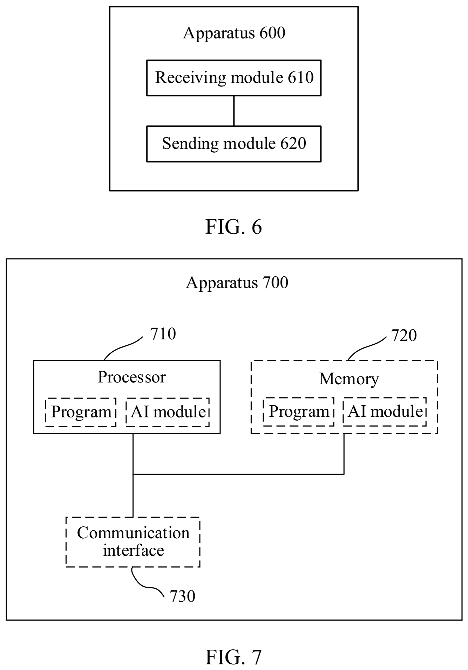

FIG. 6 to FIG. 9 each are a diagram of a possible apparatus according to an embodiment of this application. The apparatus may be configured to implement the functions of the terminal device or the network device in the foregoing method embodiments. Therefore, beneficial effects of the foregoing method embodiments can also be implemented.

FIG. 6 is a block diagram of a communication apparatus according to an embodiment of this application. As shown in FIG. 6, a communication apparatus (briefly referred to as an apparatus below) 600 includes a receiving module 610 and a sending module 620. Optionally, the apparatus 600 further includes a processing module.

In a possible design, the apparatus 600 is configured to implement functions of the terminal device in the method embodiments in FIG. 4 and FIG. 5. For example, the apparatus 600 may correspond to the terminal device in FIG. 1.

**Example 1:** The receiving module 610 is configured to receive first information. The first information indicates to perform frequency-hopping transmission on a CB or a plurality of CBGs, the plurality of CBs or the plurality of CBGs belong to one TB, and one CBG includes a plurality of CBs. The sending module 620 is configured to send the plurality of CBs or the plurality of CBGs on a plurality of frequency domain resources through frequency hopping. The plurality of frequency domain resources correspond to different frequencies.

Optionally, the receiving module 610 is further configured to receive second information. The second information indicates frequency domain positions of the plurality of frequency domain resources. The processing module is configured to determine the plurality of frequency domain resources based on the second information.

Optionally, the processing module is further configured to determine a TB. The receiving module 610 is further configured to receive third information. The third information indicates a quantity N of the plurality of CBs or the plurality of CBGs, and N is an integer greater than 1. The processing module is further configured to divide the TB into N CBs or N CBGs based on the third information.

Optionally, the sending module 620 is further configured to send fourth information. The fourth information includes at least one piece of the following information: whether the apparatus 600 has a frequency-hopping transmission capability, a frequency hopping range within a carrier or a BWP on which the apparatus 600 operates, a power consumption level of the apparatus 600, an energy storage level of the apparatus 600, or a type of the apparatus 600.

For more detailed descriptions of the receiving module 610 and the sending module 620, directly refer to related descriptions in the embodiment in FIG. 4. Details are not described herein again.

**Example 2:** The receiving module 610 is configured to receive first information. The first information indicates to perform out-of-order transmission on a plurality of CBs or a plurality of CBGs, the plurality of CBs or the plurality of CBGs belong to one TB, and the one CBG includes a plurality of CBs. The sending module 620 is configured to send the plurality of CBs or the plurality of CBGs in a transmission sequence of the plurality of CBs or the plurality of CBGs.

Optionally, the receiving module 610 is further configured to receive second information. The second information indicates the transmission sequence of the plurality of CBs or the plurality of CBGs. The processing module is configured to determine the transmission sequence of the plurality of CBs or the plurality of CBGs based on the second information.

Optionally, the processing module is further configured to determine a TB. The receiving module 610 is further configured to receive third information. The third information indicates a quantity N of the plurality of CBs or the plurality of CBGs, and N is an integer greater than 1. The processing module is further configured to divide the TB into N CBs or N CBGs based on the third information.

Optionally, the sending module 620 is further configured to send fourth information. The fourth information includes at least one piece of the following information: whether the apparatus 600 has a frequency-hopping transmission capability, a frequency hopping range within a carrier or a BWP on which the apparatus 600 operates, a power consumption level of the apparatus 600, an energy storage level of the apparatus 600, or a type of the apparatus 600.

For more detailed descriptions of the receiving module 610 and the sending module 620, directly refer to related descriptions in the embodiment in FIG. 5. Details are not described herein again.

In another possible design, the apparatus 600 is configured to implement functions of the network device in the method embodiments in FIG. 4 and FIG. 5. For example, the apparatus 600 may correspond to the access network device in FIG. 1.

**Example 1:** The sending module 620 is configured to send first information. The first information indicates to perform frequency-hopping transmission on a plurality of CBs or a plurality of CBGs, the plurality of CBs or the plurality of CBGs belong to one transport block TB, one CBG includes a plurality of CBs, and N is an integer greater than 1. The receiving module 610 is configured to receive the plurality of CBs or the plurality of CBGs on a plurality of frequency domain resources through frequency hopping. The plurality of frequency domain resources correspond to different frequencies.

Optionally, the sending module 620 is further configured to send second information. The second information indicates frequency domain positions of the plurality of frequency domain resources.

Optionally, the sending module 620 is further configured to send third information. The third information indicates a quantity N of the plurality of CBs or the plurality of CBGs, and N is an integer greater than 1.

Optionally, the receiving module 610 is further configured to receive fourth information. The fourth information includes at least one piece of the following information: whether the apparatus 600 has a frequency-hopping transmission capability, a frequency hopping range within a carrier or a BWP on which the apparatus 600 operates, a power consumption level of the apparatus 600, an energy storage level of the apparatus 600, or a type of the apparatus 600.

Optionally, the processing module is further configured to determine a value of N and/or a size of each of the plurality of CBs or a size of each of the plurality of CBGs based on the fourth information.

For more detailed descriptions of the receiving module 610 and the sending module 620, directly refer to related descriptions in the embodiment in FIG. 4. Details are not described herein again.

**Example 2:** The sending module 620 is configured to send first information. The first information indicates to perform out-of-order transmission on a plurality of CBs or a plurality of CBGs, the plurality of CBs or the plurality of CBGs belong to one transport block TB, and the one CBG includes a plurality of CBs. The receiving module 610 is configured to receive the plurality of CBs or the plurality of CBGs in a transmission sequence of the plurality of CBs or the plurality of CBGs.

Optionally, the sending module 620 is further configured to send second information. The second information indicates the transmission sequence of the plurality of CBs or the plurality of CBGs.

Optionally, the sending module 620 is further configured to send third information. The third information indicates a quantity N of the plurality of CBs or the plurality of CBGs, and N is an integer greater than 1.

Optionally, the receiving module 610 is further configured to receive fourth information. The fourth information includes at least one piece of the following information: whether the apparatus 600 has a frequency-hopping transmission capability, a frequency hopping range within a carrier or a BWP on which the apparatus 600 operates, a power consumption level of the apparatus 600, an energy storage level of the apparatus 600, or a type of the apparatus 600.

Optionally, the processing module is further configured to determine a value of N and/or a size of each of the plurality of CBs or a size of each of the plurality of CBGs based on the fourth information.

For more detailed descriptions of the receiving module 610 and the sending module 620, directly refer to related descriptions in the embodiment in FIG. 5. Details are not described herein again.

It should be noted that the apparatus 600 may include the sending module but does not include the receiving module. Alternatively, the apparatus 600 may include the receiving module but does not include the sending module. This may be specifically determined based on whether the foregoing solutions performed by the apparatus 600 include a sending action and a receiving action.

FIG. 7 is another block diagram of a communication apparatus according to an embodiment of this application. As shown in FIG. 7, a communication apparatus (briefly referred to as an apparatus below) 700 includes one or more processors 710. The processor 710 may be a general-purpose processor, a dedicated processor, or the like. For example, the processor 710 may be a baseband processor or a central processing unit. The baseband processor may be configured to process a communication protocol and communication data. The central processing unit may be configured to control the apparatus (for example, a terminal device, a network device, or a chip), to execute a software program and process data of the software program.

Optionally, in a design, the processor 710 may include a program (which may also be referred to as code or instructions). The program may be run on the processor 710, to enable the apparatus 700 to perform the method performed by the terminal device or the network device in the foregoing method embodiments. In another possible design, the apparatus 700 includes a circuit (not shown in FIG. 7). The circuit is configured to implement a function of the terminal device or the network device in the foregoing method embodiments.

For example, the processor 710 may be configured to execute the computer program or the instructions in the memory, to implement the steps performed by the terminal device or the network device in the method embodiment shown in any one of the embodiments in FIG. 4 and FIG. 5.

Optionally, the apparatus 700 may include one or more memories 720. The memory 720 stores a program (which sometimes may also be referred to as code or instructions), and the program may be run on the processor 710, to enable the apparatus 700 to perform the method performed by the terminal device or the network device in the foregoing embodiments.

Optionally, the processor 710 and/or the memory 720 may include an artificial intelligence (artificial intelligence, AI) module, and the AI module is configured to implement an AI-related function. The AI module may be implemented by using software, hardware, or a combination of software and hardware. For example, the AI module may include a radio intelligent controller (radio intelligent controller, RIC) module. For example, the AI module may be a nearreal-time RIC or a non-real-time RIC.

Optionally, the processor 710 and/or the memory 720 may further store data. The processor and the memory may be separately disposed, or may be integrated together.

Optionally, the apparatus 700 may further include a communication interface 730. The processor 710 may also be sometimes referred to as a processing unit, and controls the apparatus (for example, a terminal device or a network device). The communication interface 730 sometimes may also be referred to as a transceiver unit, a transceiver machine, a transceiver circuit, a transceiver, or the like, and is configured to implement a transceiver function of the apparatus.

Optionally, the apparatus 700 further includes the communication interface 730. The processor 710 and the communication interface 730 are coupled to each other. It may be understood that the communication interface 730 may be a transceiver or an input/output interface.

When the apparatus 700 is configured to implement the method shown in FIG. 4 or FIG. 5, the processor 710 is configured to perform a function of the processing module, and the communication interface 730 is configured to perform a function of the sending module or the receiving module. Whether the communication interface 730 is used for sending or receiving may be specifically determined based on whether the apparatus 700 is configured to perform a sending action or a receiving action in the solution performed by the apparatus 700.

When the apparatus 700 is a chip used in a terminal device, the chip implements functions of the terminal device in the foregoing method embodiments. The chip of the terminal device receives a signal from another module (for example, a radio frequency module or an antenna) in the terminal device, and the signal may be sent by a network device to the terminal device. Alternatively, the chip of the terminal device sends a signal to another module (for example, a radio frequency module or an antenna) in the terminal device, and the signal may be sent by the terminal device to a network device.

When the apparatus 700 is a chip used in a network device, the chip implements functions of the network device in the foregoing method embodiments. The chip of the network device receives a signal from another module (for example, a radio frequency module or an antenna) in the network device, and the signal may be sent by a terminal device to the network device. Alternatively, the chip of the network device sends a signal to another module (for example, a radio frequency module or an antenna) in the network device, and the signal may be sent by the network device to a terminal device.

It may be understood that when the apparatus 700 is a terminal device or a network device, the communication interface 730 may be a transceiver, and may specifically include a transmitter and a receiver. The transmitter is configured to send a signal, and the receiver is configured to receive a signal. When the apparatus 700 is a chip used in the terminal device or the network device, the communication interface 730 may be an input/output circuit. The input circuit may be configured to perform receiving, and the output interface may be configured to perform sending.

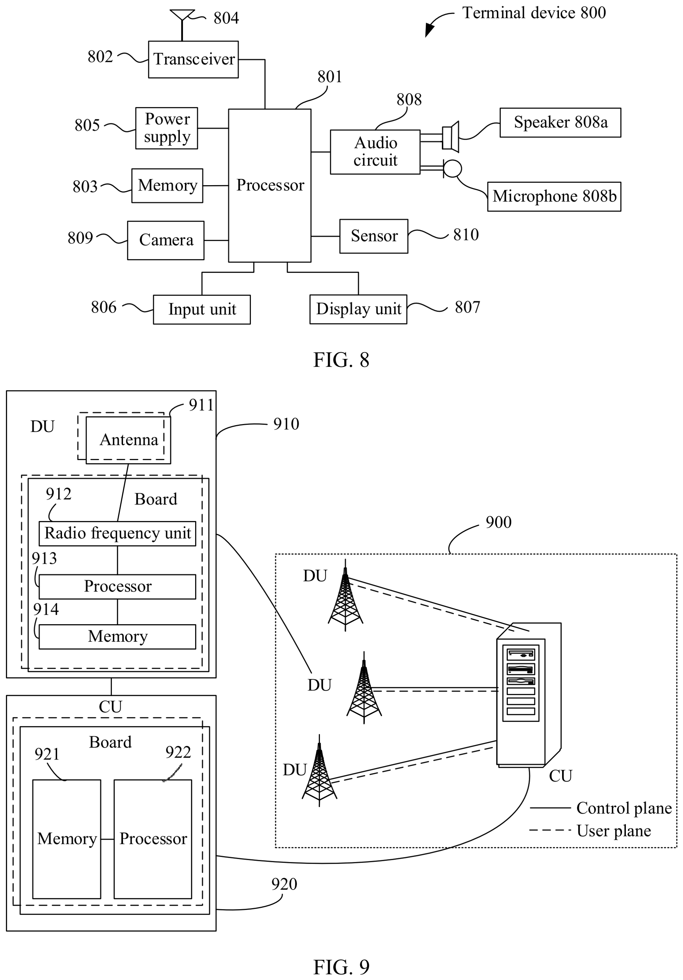

FIG. 8 is a diagram of a structure of a terminal device according to an embodiment of this application. As shown in FIG. 8, the terminal device 800 may be used in the system shown in FIG. 1, to perform functions of the terminal device in the foregoing method embodiments. As shown in FIG. 8, the terminal device 800 includes a processor 801 and a transceiver 802. Optionally, the terminal device 800 further includes a memory 803. The processor 801, the transceiver 802, and the memory 803 communicate with each other through an internal connection path, to transfer a control signal and/or a data signal. The memory 803 is configured to store a computer program. The processor 801 is configured to invoke the computer program from the memory 803 and run the computer program, to control the transceiver 802 to receive/send a signal. Optionally, the terminal device 800 may further include an antenna 804, configured to send, via a radio signal, uplink data or uplink control signaling output by the transceiver 802.

The processor 801 and the memory 803 may be integrated into one processing apparatus. The processor 801 is configured to execute program code stored in the memory 803 to implement the foregoing functions. During specific implementation, the memory 803 may alternatively be integrated into the processor 801, or may be independent of the processor 801. The processor 801 may correspond to the processing module in FIG. 6 or the processor in FIG. 7.

The transceiver 802 may correspond to the transceiver module in FIG. 6 or the communication interface in FIG. 7, and may also be referred to as a transceiver unit. The transceiver 802 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It should be understood that, the terminal device 800 shown in FIG. 8 can implement the steps related to the terminal device in the method embodiments in FIG. 4 and FIG. 5. Operations and/or functions of the modules in the terminal device 800 are separately intended to implement corresponding procedures in the foregoing method embodiments. For details, refer to the descriptions in the foregoing method embodiments. To avoid repetition, detailed descriptions are properly omitted herein.

The processor 801 may be configured to perform an action that is implemented inside the terminal device and that is described in the foregoing method embodiments. The transceiver 802 may be configured to perform a sending action by the terminal device for the network device or a receiving operation from the network device in the foregoing method embodiments. For details, refer to the descriptions in the foregoing method embodiments. Details are not described herein again.

Optionally, the terminal device 800 may further include a power supply 805, configured to supply power to various components or circuits in the terminal device 800.

In addition, to make functions of the terminal device more perfect, the terminal device 800 may further include one or more of an input unit 806, a display unit 807, an audio circuit 808, a camera 809, a sensor 810, and the like, and the audio circuit may further include a speaker 808a, a microphone 808b, and the like.

FIG. 9 is a diagram of a structure of a radio access network device according to an embodiment of this application, for example, may be a diagram of a structure of a base station. The base station 900 may be used in the system shown in FIG. 1, to perform functions of the network device in the foregoing method embodiments. As shown in FIG. 9, the base station 900 may include one or more of the following: one or more (DUs+RUs) 910 and one or more CUs 920. The CU 920 may communicate with a next generation core network (next generation core, NG core). The DU may include at least one antenna 911, at least one radio frequency unit 912, at least one processor 913, and at least one memory 914. The DU part is mainly configured to receive and send radio frequency signals, perform conversion between a radio frequency signal and a baseband signal, and perform partial baseband processing. The CU 920 may include at least one processor 922 and at least one memory 921. The CU 920 and the DU may communicate with each other through an interface. A control plane (control plane, CP) interface may be an Fs-C, for example, an F1-C. A user plane (user plane, UP) interface may be an Fs-U, for example, an F1-U. The DU and the RU may operate to jointly implement functions of a physical (physical, PHY) layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement a higher layer function of the PHY layer, and the RU is configured to implement a lower layer function and a radio frequency function of the PHY layer. The higher-layer functions of the PHY layer may include a part of functions of the PHY layer, and the part of functions is closer to the MAC layer. The lower-layer functions of the PHY layer may include another part of functions of the PHY layer, and the part of functions is closer to an intermediate radio frequency side.

The CU 920 is mainly configured to perform baseband processing, control a base station, and the like. The DU and the CU 920 may be physically disposed together, or may be physically separated, that is, in a distributed base station. The CU 920 is a control center of the base station, may correspond to the processing unit in FIG. 6 or the processor in FIG. 7, may also be referred to as a processing module, and is mainly configured to complete a baseband processing function. For example, the CU 920 may be configured to control the base station to perform an operation procedure related to the network device in the foregoing method embodiment.

Specifically, baseband processing on the CU and the DU may be divided based on a protocol layer of a wireless network. For example, functions of a packet data convergence protocol (packet data convergence protocol, PDCP) layer and a protocol layer above the PDCP layer are set on the CU, and functions of a protocol layer, for example, an RLC layer and a MAC layer, below the PDCP layer are set on the DU. For another example, the CU implements functions of an RRC layer and a PDCP layer, and the DU implements functions of an RLC layer, a MAC layer, and a PHY layer.

In addition, optionally, the base station 900 may include one or more radio frequency units (RUs), one or more DUs, and one or more CUs. The DU may include at least one processor 913 and at least one memory 914, the RU may include at least one antenna 911 and at least one radio frequency unit 912, and the CU may include at least one processor 922 and at least one memory 921.

In an instance, the CU 920 may include one or a plurality of boards, and the plurality of boards may jointly support a radio access network (for example, a 5G network) of a single access standard, or may respectively support radio access networks (for example, an LTE network, a 5G network, or another network) of different access standards. The memory 921 and the processor 922 may serve one or more boards. In other words, a memory and a processor may be disposed on each board. Alternatively, a plurality of boards may share a same memory and a same processor. In addition, a necessary circuit may further be disposed on each board. The DU may include one or a plurality of boards, and the plurality of boards may jointly support a radio access network (for example, a 5G network) of a single access standard, or may respectively support radio access networks (for example, an LTE network, a 5G network, or another network) of different access standards. The memory 914 and the processor 913 may serve one or more boards. In other words, a memory and a processor may be disposed on each board. Alternatively, a plurality of boards may share a same memory and a same processor. In addition, a necessary circuit may further be disposed on each board.

It should be understood that the base station 900 shown in FIG. 9 can implement each process related to the network device in the method embodiments in FIG. 4 and FIG. 5. Operations and/or functions of the modules in the base station 900 are separately intended to implement corresponding procedures in the foregoing method embodiments. For details, refer to the descriptions in the foregoing method embodiments. To avoid repetition, detailed descriptions are properly omitted herein.

It should be understood that, the base station 900 shown in FIG. 9 is merely a possible architecture of the radio access network device, and should not constitute any limitation on this application. The method provided in this application is applicable to a network device in another architecture, for example, a radio access network device including a CU, a DU, and an AAU. A specific architecture of the radio access network device is not limited in this application.

It should be understood that, FIG. 9 is merely an example rather than a limitation, and the radio access network device may not depend on the structure shown in FIG. 9. For example, the radio access network device may also include an AAU, and may further include a CU and/or a DU; or the radio access network device may also include a BBU, and may further include an adaptive radio unit (adaptive radio unit, ARU). This is not limited in this application.

The CU and/or the DU may be configured to perform an action that is implemented inside the radio access network device and that is described in the foregoing method embodiments. The AAU may be configured to perform an action that is of the radio access network device sending information to or receiving information from the terminal device and that is described in the foregoing method embodiments. For details, refer to the descriptions in the foregoing method embodiments. Details are not described herein again.

It should be noted that, the foregoing method embodiments may be applied to a processor, or implemented by a processor. The processor may be an integrated circuit chip and has a signal processing capability. In an implementation process, steps in the foregoing method embodiments can be implemented by using a hardware integrated logical circuit in the processor, or by using instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

This application further provides a computer-readable medium storing a computer program. When the computer program is executed by a computer, functions of any one of the foregoing method embodiments are implemented.

This application further provides a computer program product including instructions. When the computer program product is executed by a computer, a function of the foregoing method embodiments is implemented.

The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

All or some of the methods provided in the foregoing embodiments may be implemented by software, hardware, firmware, or any combination thereof. When software is used to implement the embodiments, all or a part of the embodiments may be implemented in a form of a computer program product. The computer program product may include one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from one website site, computer, server or data center to another website site, computer, server or data center in a wired (for example, coaxial cable, optical fiber, digital subscriber line (DSL)) or wireless (for example, infrared, wireless, microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid-state disk (SSD)), or the like. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected according to an actual requirement, to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1.   An uplink signal transmission method, comprising:

   receiving, by a terminal device, first information, wherein the first information indicates to perform frequency-hopping transmission on a plurality of code blocks CBs or a plurality of code block groups CBGs, the plurality of CBs or the plurality of CBGs belong to one transport block TB, and one CBG comprises a plurality of CBs; and
   sending, by the terminal device, the plurality of CBs or the plurality of CBGs on a plurality of frequency domain resources through frequency hopping, wherein the plurality of frequency domain resources correspond to different frequencies.

2.   The method according to claim 1, wherein the method further comprises:

   receiving, by the terminal device, second information, wherein the second information indicates frequency domain positions of the plurality of frequency domain resources; and
   determining, by the terminal device, the plurality of frequency domain resources based on the second information.

3.   The method according to claim 1 or 2, wherein the plurality of frequency domain resources are located on two sides of a carrier or a bandwidth part BWP on which the terminal device operates.

4.   The method according to any one of claims 1 to 3, wherein the method further comprises:

   determining, by the terminal device, the TB;
   receiving, by the terminal device, third information, wherein the third information indicates a quantity N of the plurality of CBs or the plurality of CBGs, and N is an integer greater than 1; and
   dividing, by the terminal device, the TB into N CBs or N CBGs based on the third information.

5.   The method according to any one of claims 1 to 4, wherein the method further comprises:
   sending, by the terminal device, fourth information, wherein the fourth information comprises at least one of the following: whether the terminal device has a frequency-hopping transmission capability, a frequency hopping range within the carrier or the BWP on which the terminal device operates, a power consumption level of the terminal device, an energy storage level of the terminal device, or a type of the terminal device.

6.   An uplink signal transmission method, comprising:

sending, by a network device, first information, wherein the first information indicates to perform frequency-hopping transmission on a plurality of code blocks CBs or a plurality of code block groups CBGs, the plurality of CBs or the plurality of CBGs belong to one transport block TB, and one CBG comprises a plurality of CBs; and receiving, by the network device, the plurality of CBs or the plurality of CBGs on a plurality of frequency domain resources through frequency hopping, wherein the plurality of frequency domain resources correspond to different frequencies.

7. The method according to claim 6, wherein the method further comprises:
sending, by the network device, second information, wherein the second information indicates frequency domain positions of the plurality of frequency domain resources.

8. The method according to claim 6 or 7, wherein the plurality of frequency domain resources are located on two sides of a carrier or a bandwidth part BWP on which a terminal device operates.

9. The method according to any one of claims 6 to 8, wherein the method further comprises:
sending, by the network device, third information, wherein the third information indicates a quantity N of the plurality of CBs or the plurality of CBGs, and N is an integer greater than 1.

10. The method according to any one of claims 6 to 9, wherein the method further comprises:
receiving, by the network device, fourth information, wherein the fourth information comprises at least one of the following: whether the terminal device has a frequency-hopping transmission capability, a frequency hopping range within the carrier or the BWP on which the terminal device operates, a power consumption level of the terminal device, an energy storage level of the terminal device, or a type of the terminal device.

11. The method according to claim 10, wherein the method further comprises:
determining, by the network device, a value of N and/or a size of each of the plurality of CBs or a size of each of the plurality of CBGs based on the fourth information.

12. An uplink signal transmission method, comprising:

receiving, by a terminal device, first information, wherein the first information indicates to perform out-of-order transmission on a plurality of code blocks CBs or a plurality of code block groups CBGs, the plurality of CBs or the plurality of CBGs belong to one transport block TB, and the one CBG comprises a plurality of CBs; and sending, by the terminal device, the plurality of CBs or the plurality of CBGs in a transmission sequence of the plurality of CBs or the plurality of CBGs.

13. The method according to claim 12, wherein the out-of-order transmission comprises interleaved transmission.

14. The method according to claim 12 or 13, wherein the method further comprises:

receiving, by the terminal device, second information, wherein the second information indicates the transmission sequence of the plurality of CBs or the plurality of CBGs; and determining, by the terminal device, the transmission sequence of the plurality of CBs or the plurality of CBGs based on the second information.

15. The method according to any one of claims 12 to 14, wherein the method further comprises:

determining, by the terminal device, the TB;
receiving, by the terminal device, third information, wherein the third information indicates a quantity N of the plurality of CBs or the plurality of CBGs, and N is an integer greater than 1; and dividing, by the terminal device, the TB into N CBs or N CBGs based on the third information.

16. The method according to any one of claims 12 to 15, wherein the method further comprises:
sending, by the terminal device, fourth information, wherein the fourth information comprises at least one of the following: whether the terminal device has a frequency-hopping transmission capability, a frequency hopping range within the carrier or the BWP on which the terminal device operates, a power consumption level of the terminal device, an energy storage level of the terminal device, or a type of the terminal device.

**17.** An uplink signal transmission method, comprising:

sending, by a network device, first information, wherein the first information indicates to perform out-of-order transmission on a plurality of code blocks CBs or a plurality of code block groups CBGs, the plurality of CBs or the plurality of CBGs belong to one transport block TB, and the one CBG comprises a plurality of CBs; and receiving, by the network device, the plurality of CBs or the plurality of CBGs in a transmission sequence of the plurality of CBs or the plurality of CBGs.

**18.** The method according to claim 17, wherein the out-of-order transmission comprises interleaved transmission.

**19.** The method according to claim 17 or 18, wherein the method further comprises:
sending, by the network device, second information, wherein the second information indicates the transmission sequence of the plurality of CBs or the plurality of CBGs.

**20.** The method according to any one of claims 17 to 19, wherein the method further comprises:
sending, by the network device, third information, wherein the third information indicates a quantity N of the plurality of CBs or the plurality of CBGs, and N is an integer greater than 1.

**21.** The method according to any one of claims 17 to 20, wherein the method further comprises:
receiving, by the network device, fourth information, wherein the fourth information comprises at least one of the following: whether the terminal device has a frequency-hopping transmission capability, a frequency hopping range within the carrier or the BWP on which the terminal device operates, a power consumption level of the terminal device, an energy storage level of the terminal device, or a type of the terminal device.

**22.** The method according to claim 21, wherein the method further comprises:
determining, by the network device, a value of N and/or a size of each of the plurality of CBs or a size of each of the plurality of CBGs based on the fourth information.

**23.** A communication apparatus, comprising a module configured to implement the method according to any one of claims 1 to 22.

**24.** A communication apparatus, comprising a processor, configured to execute a computer program and/or use a logic circuit, to enable the communication apparatus to implement the method according to any one of claims 1 to 22.

**25.** The apparatus according to claim 24, further comprising a memory, configured to store a computer program and/or a configuration file of the logic circuit.

**26.** The apparatus according to claim 24 or 25, further comprising a communication interface, configured to input and/or output a signal.

**27.** A computer-readable storage medium, wherein the computer-readable storage medium stores a computer program, and when the computer program is executed by a processor, the method according to any one of claims 1 to 22 is performed.

**28.** A computer program product, comprising a computer program, wherein when the computer program is run, the method according to any one of claims 1 to 18 is performed.

**29.** A communication system, comprising a terminal device and a network device, wherein the terminal device is configured to implement the method according to any one of claims 1 to 5, and the network device is configured to implement the method according to any one of claims 6 to 11; or the terminal device is configured to implement the method according to any one of claims 12 to 16, and the network device is configured to implement the method according to any one of claims 17 to 22.

FIG. 1

FIG. 2

$$d_k^{(0)} \longrightarrow \boxed{\begin{array}{c}\text{Block}\\\text{interleaving}\end{array}} \xrightarrow{v_k^{(0)}}$$

$$d_k^{(1)} \longrightarrow \boxed{\begin{array}{c}\text{Block}\\\text{interleaving}\end{array}} \xrightarrow{v_k^{(1)}} \boxed{\begin{array}{c}\text{Bit}\\\text{collection}\end{array}} \xrightarrow{w_k} \boxed{\begin{array}{c}\text{Bit selection}\\\text{and processing}\end{array}} \xrightarrow{e_k}$$

$$d_k^{(2)} \longrightarrow \boxed{\begin{array}{c}\text{Block}\\\text{interleaving}\end{array}} \xrightarrow{v_k^{(2)}}$$

**FIG. 3**

400

| Network device | | Terminal device |
| --- | --- | --- |

S401: First information, where the first information indicates to perform frequency-hopping transmission on a plurality of CBs or a plurality of CBGs

S402: Send or receive the plurality of CBs or the plurality of CBGs on a plurality of frequency domain resources through frequency hopping

**FIG. 4**

500

| Network device | | Terminal device |
| --- | --- | --- |

S501: First information, where the first information indicates to perform out-of-order transmission on a plurality of CBs or a plurality of CBGs

S502: Send or receive the plurality of CBs or the plurality of CBGs in a transmission sequence of the plurality of CBs or the plurality of CBGs

**FIG. 5**

Apparatus 600

Receiving module 610

Sending module 620

FIG. 6

Apparatus 700

710

Processor

Program | AI module

720

Memory

Program | AI module

Communication interface

730

FIG. 7

**FIG. 8**

**FIG. 9**

## INTERNATIONAL SEARCH REPORT

| International application No. |
| --- |
| **PCT/CN2024/104067** |

| A. | CLASSIFICATION OF SUBJECT MATTER |
| --- | --- |

H04W 72/0453(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNABS, CNTXT, VEN, CNKI, WOTXT, EPTXT, USTXT: 不按序, 失序, 传输块, 错乱, 错序, 乱序, 交错, 交织, 码块, 码块组, 上行, 跳频指示, 终端, 基站, interleaving, order, disorder, TB, CB, CBG, UL, PUSCH, FH indication, frequency hopping, indication, UE, BS

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2020187205 A1 (NTT DOCOMO, INC. et al.) 11 June 2020 (2020-06-11) description, paragraphs 21-64 | 1-11, 23-29 |
| X | KR 20180110577 A (KT CORP.) 10 October 2018 (2018-10-10) description, paragraphs 45-131 | 12-29 |
| X | US 2020266941 A1 (NTT DOCOMO, INC.) 20 August 2020 (2020-08-20) description, paragraphs 22-71 | 1-11, 23-29 |
| X | US 2021044383 A1 (QUALCOMM INC.) 11 February 2021 (2021-02-11) description, paragraphs 34-167 | 12-29 |
| A | CN 112997443 A (ELECTRONICS AND TELECOMMUNICATIONS RESEARCH INSTITUTE) 18 June 2021 (2021-06-18) entire document | 1-29 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 August 2024** | 08 November 2024 |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/104067**

| Patent document cited in search report | | | Publication date (day/month/year) | Patent family member(s) | | | Publication date (day/month/year) |
|---|---|---|---|---|---|---|---|
| US | 2020187205 | A1 | 11 June 2020 | WO | 2019032691 | A1 | 14 February 2019 |
| KR | 20180110577 | A | 10 October 2018 | KR | 20180111443 | A | 11 October 2018 |
| | | | | KR | 102108011 | B1 | 08 May 2020 |
| US | 2020266941 | A1 | 20 August 2020 | WO | 2019051160 | A1 | 14 March 2019 |
| US | 2021044383 | A1 | 11 February 2021 | US | 11652574 | B2 | 16 May 2023 |
| | | | | WO | 2021026067 | A1 | 11 February 2021 |
| CN | 112997443 | A | 18 June 2021 | JP | 2022509758 | A | 24 January 2022 |
| | | | | JP | 7487192 | B2 | 20 May 2024 |
| | | | | KR | 20200054086 | A | 19 May 2020 |
| | | | | US | 2021360610 | A1 | 18 November 2021 |
| | | | | US | 11917651 | B2 | 27 February 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310831011